# EUROPEAN PATENT APPLICATION

(11) **EP 3 276 763 A1**
(43) Date of publication of application: **31.01.2018**
(21) Application number: 16182086.5
(22) Date of filing: 29.07.2016
(51) Int. Cl.: H02B 13/035, H02B 13/075

(54) **A CABLE BOX BETWEEN A GIS AND A HIGH-VOLTAGE ELECTRIC CABLE**

(71) Applicant: General Electric Technology GmbH, 5400 Baden (CH)
(72) Inventor: FICHEUX, Arnaud, 73000 Chambery (FR); RAT-PATRON, Laurent, 73100 Mouxy (FR)
(74) Representative: Cleary, Fidelma

(57) **Abstract**

The invention relates to a cable box (20) between a gas-insulated switchgear (GIS) and a high-voltage electric cable, the cable box having a cable box enclosure (1), a GIS terminal (2) of the GIS, a cable end (3) of the electric cable, and a conductor bar (14) for connecting the cable end (3) to the GIS terminal (2), characterised in that the said conductor bar (14) is movably provided within the cable box enclosure (1) such that it can be moved between a first position where it connects the cable end (3) to the GIS terminal (2) and a second position where it connects the cable end (3) with the cable box enclosure (1). The cable box enclosure is ideally connected to ground, and so the electric cable is earthed in the second position. The accompanying figure shows the conductor bar (14) in the second position.

## Description

### TECHNICAL FIELD

The invention relates to the field of gas-insulated switchgears (GIS). More particularly, the invention relates to a cable box connecting a GIS and an electric cable, wherein the connection between the GIS and the electric cable can be physically disconnected and the electric cable temporarily earthed.

### PRIOR ART

Switchgears are provided in high-voltage electrical power systems to enable downstream equipment to be de-energised and isolated so as to permit, for example, repair, maintenance, or installation of a new component. Gas-insulated switchgears (GIS) are generally preferred to other types of switchgears as they are capable of safely handling large currents and power levels while occupying a substantially smaller volume. Electrical conductors in the GIS are fitted inside tubular compartments filled with gas, typically SF6 gas.

For some applications, the GIS is provided with a cable box, which connects the GIS to a high-voltage electric cable either arriving from the power station or leading to downstream equipment. A cable box typically comprises a cable box enclosure, and houses the cable end of the electric cable, a cable end electrode, which is mounted on the cable end, a GIS terminal of the electrical conductors of the GIS, and a conductor bar connecting the cable end electrode to the GIS terminal.

When work has to be conducted within the cable box, e.g. during installation or maintenance of the cable box, or to facilitate testing of the GIS (e.g. dielectric testing) or the electric cable, the power supply has to be switched off and often the electric cable within the cable box physically disconnected from the GIS.

However, an induced current or a residual charge may sometimes exist in the electric cable even after the power supply has been switched off, which poses a risk of electrocution for service personnel accessing the interior of the cable box if the electric cable is not discharged beforehand. It is therefore imperative that this electric cable be earthed before any sort of work is undertaken within the cable box.

The task of earthing the electric cable and physically disconnecting it from the GIS is a tedious one. It usually involves the emptying of the gas within the metallic cable box enclosure, opening of an access port cover, attaching a temporary earthing device to the cable box enclosure at the access port, connecting the temporary earthing device to the cable end to earth it through its connection to the cable box enclosure, opening of another access port cover, and finally, the removal of the cable box electrode and conductor bar to physically disconnect the cable end and the GIS terminal.

The temporary earthing device currently used is a device which is secured to the cable box enclosure at an access port and having an earthing rod protruding inwards to be placed in close proximity to the cable end. The temporary earthing device can then be externally operated to put the earthing rod from its position in close proximity the cable end to a position where it is physically connected to the cable end. Only once the temporary earthing device is installed and the electric cable earthed can further work be safely be carried out in the cable box.

However, service personnel that have to work in direct contact with the electric cable are placed at risk of electrocution, such as when removing the electrode and conductor bar linking the electric cable to the GIS, as there is always a possibility that operation of the temporary earthing device had been overlooked, or of its earthing rod not properly contacting the cable end when operated.

Manipulating these large and heavy components and tools within the cable box enclosure also poses a risk of damage to the cable box and injury to service personnel. On top of that, once testing has been conducted or the work completed, and the cable end electrode and conductor rod have to be reinstalled, the temporary earthing device removed, the access ports closed off and the cable box enclosure refilled with gas, which also results in the operation being rather time-consuming.

As such, there is clearly a need for a quicker and easier way of physically disconnecting the electric cable from the GIS, and temporarily earthing the electric cable. There is equally a need for a safer way of carrying out this operation, which does not place the safety of service personnel at risk.

### BRIEF DESCRIPTION OF THE INVENTION

The present invention provides a cable box between a gas-insulated switchgear (GIS) and an electric cable, the cable box having a cable box enclosure, a GIS terminal of the GIS, a cable end of the electric cable, and a conductor bar for connecting the cable end to the GIS terminal, said conductor bar being movably provided within the cable box enclosure such that it can be moved between a first position where it connects the cable end to the GIS terminal and a second position where it connects the cable end with the cable box enclosure.

The present invention also provides a method of earthing an electric cable in a cable box between a gas-insulated switchgear (GIS) and an electric cable, the method comprising providing the cable box with a cable box enclosure, a GIS terminal of the GIS, and a cable end of the electric cable, the method further comprising movably providing a conductor bar for connecting the cable end to the GIS terminal, and moving the conductor bar from a first position where it connects the cable end to the GIS terminal to a second position where it connects the cable end with the cable box enclosure so as to earth the electric cable.

Preferable features of the invention are detailed in the appendant claims.

### BRIEF DESCRIPTION OF THE FIGURES

The invention will be better understood when reading the following detailed description and non-limiting examples, as well as studying the figures, wherein:
Figures 1a-c show a cross-section view of a cable box of the prior art, and schematically illustrate the main stages of physically disconnecting the GIS and the electric cable and earthing the electric cable as is currently practised,
figures 2a-c show a cross-section view of the cable box according to a first embodiment of the present invention, and schematically illustrate the main stages of physically disconnecting the GIS and the electric cable and earthing the electric cable, and
figures 3a-c show a cross-section view of the cable box according to a second embodiment of the present invention, and schematically illustrate the main stages of physically disconnecting the GIS and the electric cable and earthing the electric cable.

In all of these figures, identical references can designate identical or similar elements. In addition, the various portions shown in the figures are not necessarily shown according to a uniform scale, in order to make the figures more legible.

### DETAILLED DESCRIPTION OF PARTICULAR EMBODIMENTS

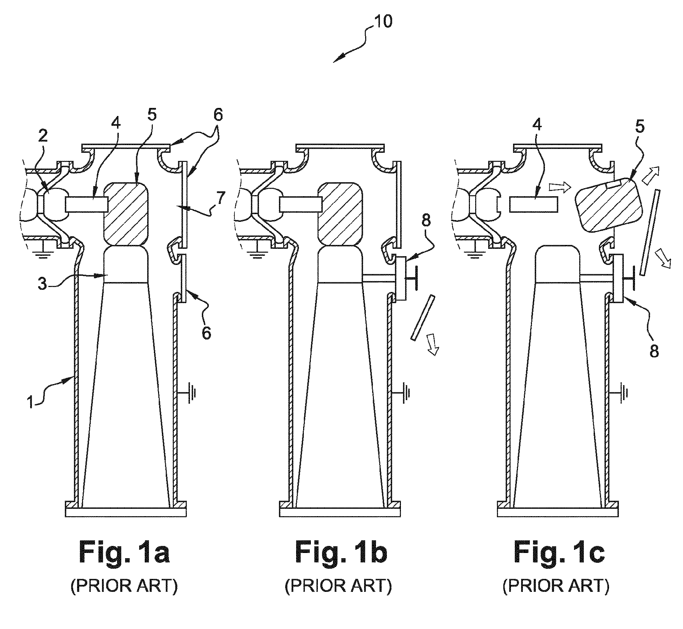

Figures 1a-c (prior art) schematically depict the main steps of physically disconnecting and temporarily earthing a high-voltage electric cable in a cable box as is currently practised. The cable box 10 has a cable box enclosure 1, within which a GIS terminal 2 of the GIS, a cable end 3 of the electric cable, a cable end electrode 5 and a conductor bar 4 for connecting the cable end 3 to the GIS terminal 2 are located. The cable box enclosure 1 is typically a metallic enclosure in a somewhat T-shape, provided with access ports 7 for access or attachment purposes. The cable box 10 is structurally attached to the GIS at one side, with the GIS terminal 2 protruding horizontally therein. Meanwhile, the electric cable is attached using a cable bushing to the bottom of the cable box enclosure 1, with the cable end 3 held protruding vertically therein. Mounted vertically on the cable end 3 is the cable end electrode 5, while the conductor bar 4 extends horizontally from the cable end electrode 5 to connect to the GIS terminal 2. The remaining access ports 7 are preferably closed off with port covers 6, and the cable box enclosure 10 is typically pressurised with insulating gas.

As previously discussed, earthing of the electric cable and physically disconnecting the it from the GIS in the cable box 10 of the prior art involves emptying of the gas within the cable box enclosure 1, opening of access port covers 6, attaching a temporary earthing device 8 to the cable box enclosure 1 and connecting it to the cable end 3, and the removal of the cable box electrode 5 and conductor rod 4.

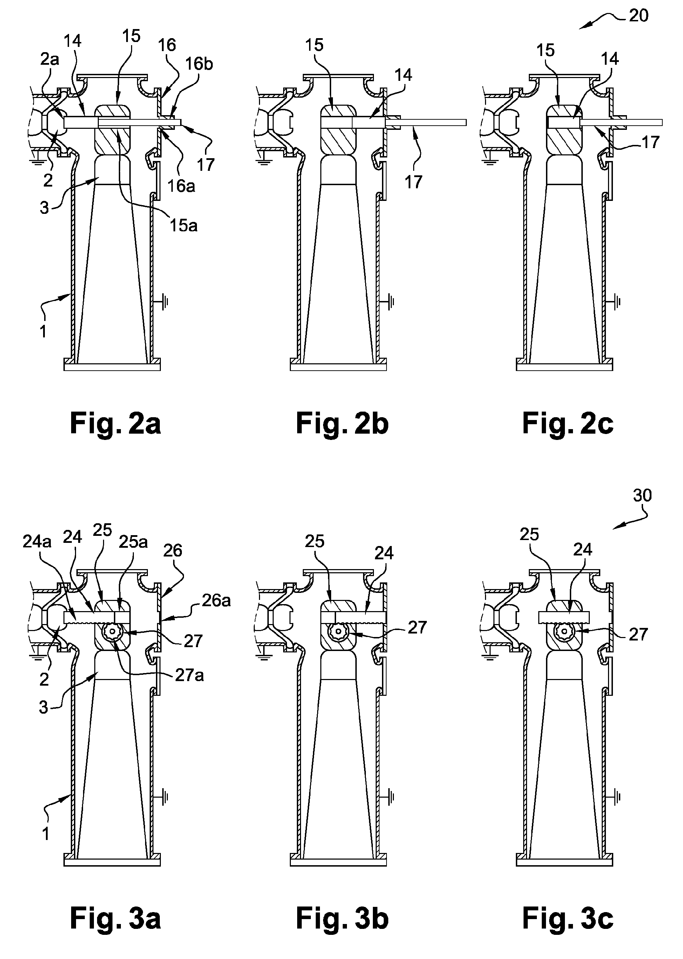

Figures 2a-c shows a cable box 20 according to a first embodiment of the invention. Except for certain details relating to the cable end electrode 15, the conductor bar 14 and one of the access port covers 16, the cable box 20 shown in these figures is essentially the same as those shown in figures 1a-c.

In this embodiment, the conductor bar 14 is slidably arranged in the cable end electrode 15 atop the cable end 3, and is provided so as to be able to slide axially along its longitudinal axis (horizontally, as depicted in the figures). The conductor bar 14 can be moved between two positions, a first position where the conductor bar 14 connects the cable end 3 in to the GIS terminal 2 as shown in figure 2a, and a second position where the conductor bar 14 connects the cable end 3 with the cable box enclosure 1 as shown in figure 2b.

The first and second positions are provided at opposite ends within the cable box enclosure 1, along an extension of the longitudinal axis of the conductor bar 14. The first position generally corresponds to an operational position, while the second corresponds to a temporary earthing position where the cable end 3 is earthed. A third position is ideally provided (or present) located intermediate the first and second positions, where the conductor bar 14 is essentially located within the cable end electrode 15 and not contacting the GIS terminal 2 or the cable box enclosure 1, as shown in figure 2c. Such a position may correspond to a position where work can be carried out on the electrical cable, e.g. testing.

In this present embodiment, the conductor bar 14 has a cylindrical form while, the cable end electrode 15 is a block comprising a cylindrical bore 15a having a larger diameter than that of the conductor bar 14 for slidably receiving it. The conductor bar 14 contacts the electrode bore 15a directly. Alternatively, or additionally, electrical spring contacts may be provided on the conductor bar 14 or in the electrode bore 15a to provide, or improve, the physical and electrical contact between the two.

The lengths of the conductor bar 14 and that of the bore 15a in the cable end electrode 15 are dimensioned such that when in the cable box enclosure 1, the conductor rod 14 remains partly within the cable end electrode bore 15a and does not fall out when at the extremities of its travel, i.e. at the first and second positions. The GIS terminal 2 is provided with a cylindrical socket 2a which the conductor bar 14 engages when in the first position. The cable box enclosure 1 is also provided with a cylindrical socket 16a, which the conductor bar 14 engages when in the second position. The conductor bar 14 contacts the sockets 2a, 16a directly. As before, electrical spring contacts may alternatively, or additionally, be provided on the conductor bar 14 or in the sockets 2a, 16a.

While the conductor bar 14 has been described as being cylindrical, it will be understood that other forms may be suitable, such as a bar with an oval cross-section. Likewise, it will also be understood that the bore 15a in the cable end electrode 15 and sockets 2a, 16a may take other corresponding forms. It will be appreciated that the form and dimensions of the bore 15a and sockets 2a, 16a do not necessarily need to correspond closely to those of the conductor bar 14. For example, electrical spring contacts if used may accommodate for such differences.

An actuating rod 17 is secured to one end of the conductor bar 14, extending away therefrom along the longitudinal axis of the conductor bar 14. It is preferably cylindrical in form, having a diameter smaller, but a length larger, than the conductor bar 14. It can be operated to move the conductor bar 14 between the two end positions, and indeed any other position therebetween which the conductor bar 14 is able to move to. The actuation rod 17 is slidably mounted to the cable box enclosure 1, and also sealingly so to allow pressurisation of the cable box enclosure 1.

In this embodiment, the actuation rod 17 is mounted at an access port cover 16 of the cable box enclosure 1. The access port cover 16 is a modified access port cover in that it is furnished with a hole 16b through which the actuation rod 17 extends, as well as the socket 16a in which the conductor bar engages when in the second position. It is also earthed, either directly, or by virtue of its connection to the rest of the cable box enclosure 1 (which is earthed). Apart from allowing earthing of the conductor bar 14, it provides support for the actuation rod 17 so as to facilitate axial movement of the actuation rod 17 and conductor bar 14 along their longitudinal axes and parallel to the cable end electrode bore 15a.

This arrangement permits the manual movement of the actuation rod 17 and hence the conductor bar 14 from outside the cable box enclosure 1. The actuation rod 17 is an insulated actuation rod, preferably made entirely of an electrically insulating material so that there is no risk of the electric current passing to the outside of the cable box enclosure 1 via the actuation rod 17. Being mounted to an access port cover 16 also facilitates its installation onto the cable box.

The operation of the cable box 20 will now be briefly discussed so as to provide a better understanding of the invention. Electricity enters the GIS via one cable box 20 provided at an upstream end of the GIS, and out at a cable box 20 provided at the downstream end of the GIS. While connected to the GIS in the operational mode, the conductor bar 14 on the cable end electrode 15 on the cable end 3 is in engagement with the socket 2a provided in the GIS terminal so as to electrically connect the electric cable to the GIS (first position, figure 2a).

Before conducting any work on the cable box 20, electrical power via the electric cable to the GIS is switched off. The actuation rod 17 connected to the conductor bar 14 is then slid axially (towards the right). This draws the conductor bar 14 out of the socket 2a provided in the GIS terminal 2 and physically disconnects the GIS and the electric cable. At this point, induced current or a residual charge may exist in the electric cable despite it being disconnected from the GIS.

Continued pulling of the actuation rod 17 then draws the conductor bar 14 through the bore 15a in the cable end electrode 15 from one side thereof to the opposite side, where it eventually engages the socket 16a provided in the access port cover 16 so as to electrically connect the electric cable to the cable box enclosure 1 (second position, figure 2b). At this point, any induced current or residual charge will be discharged by the earthing to the cable box enclosure 1, which is itself connected to ground. Works, such as maintenance of the cable box enclosure 1, or dielectric testing of the GIS, can then resume. Depending on the nature of the work or test, the operation of physically disconnecting the GIS and the electric cable and earthing the latter may be conducted on the cable boxes 20 at the upstream and downstream ends of the GIS.

Should work need to be conducted on the electric cable or the cable end 3, the conductor bar 14 will be pushed to the middle where it is connected to neither the GIS terminal 2 nor the cable box enclosure 1 (third position, figure 2c). In this position, the conductor bar 14 is substantially or entirely within the bore 15a provided in the cable end electrode 15 and the electric cable is not connected to the GIS or the cable box enclosure 1 which is earthed and can therefore be worked on. Of course, for the safety of service personnel working on or near the end of the electric cable, the conductor bar 14 is always placed into the second position prior to being placed at the third position, so that the electric cable is properly discharged.

Once work on the cable box 20 has been completed, the actuating rod 17 is slid axially (towards the left) until it engaged the socket 2a provided in the GIS terminal 2 where it is again in operational mode (back in first position, figure 2a). The cable box 20 therefore is arranged so as to be able to provide temporary earthing, i.e. prior to or for the duration of the works within the cable box.

Figures 3a-c shows a cable box 30 according to a second embodiment of the invention. While in the first embodiment the conductor bar 14 was arranged for manual operation from outside the cable box 20, the cable box 30 in this second embodiment has an actuation mechanism 27 provided within the cable box enclosure 1 to operate on the conductor bar 24. The actuation mechanism 27 in this embodiment is mounted within the cable end electrode 25, and comprises a pinion 27a which engages teeth 24a provided on the conductor bar 24. As before, the conductor bar 24 is mounted slidably along its longitudinal axis within the cable end electrode 25. The actuation mechanism 27 is electrically driven, and is preferably arranged to be remotely operated from outside the cable box enclosure 1.

By driving the pinion 27a of the actuation device 27, the conductor bar 24 can be made to move between the first position where it is connects to the GIS terminal 2 and the second position where it is connects to the cable box enclosure 1 at the access port cover 26 where it is earthed. The feature with the actuation rod 17 extending through and the access port cover 16 of the first embodiment is not necessary, although it may be optionally provided to allow manual operation. It will be understood that other types of actuation mechanism may alternatively be provided. For example, a screw actuator, or a hydraulic piston arrangement may be used.

The cable box 20, 30 according to the present invention thus completely removes the need for service personnel to be within proximity of the cable end 3 before it is physically disconnected and earthed, with the entire operation being executable from outside of the cable box enclosure 1. Service personnel therefore do not need to access the interior of the cable box enclosure 1 in order to remove the cable end electrode 5 and the conductor bar 4 and to earth the electric cable. This significantly reduces the risk of electrocution to service personnel, as well as prevents damage or injury in the handling of these components within the cable box 20.

Furthermore, this cable box 20, 30 neatly resolves the requirement to temporarily earth the electric cable and to physically disconnect the electric cable from the GIS by essentially allowing both to be accomplished in one movement. Additionally, this earthing capability is retained within the cable box enclosure 1, which is a substantial advantage as compared to the prior art where the temporary earthing device 8 has an earthing rod in close proximity to the cable end 3, and which therefore cannot be left in place during operational mode of the GIS or else the current may arc onto it. On top of that, there is no longer a need to empty and refill the insulating gas.

The cable box 20, 30 of the present invention therefore allows quicker, easier and safer disconnection of the GIS terminal 2 from the cable end 3 and earthing of the latter.

In one variant of the first embodiment, the actuation rod may be arranged to be detachably secured to the conductor bar, to be removed from the cable box enclosure once the conductor bar has been moved to the required position. In another variant, the conductor bar may be displaced by an actuation rod threadedly engaged with it such that rotation of the actuation rod causes the linear displacement of the conductor bar between the first and second positions. It will be appreciated that instead of being slidable, the conductor bar may be pivotally connected to the cable end electrode, and arranged to pivot between the first and second positions. The actuation rod may then be connected coaxially to the pivot of the conductor bar, such that rotation of the actuation rod causes the conductor bar to pivot.

It will also be appreciated that existing cable boxes, such as those of the prior art, can readily be retrofitted, so as to provide a cable box according to the present invention.

## Claims

1. A cable box (20, 30) between a gas-insulated switchgear (GIS) and an electric cable , the cable box having a cable box enclosure (1), a GIS terminal (2) of the GIS, a cable end (3) of the electric cable, and a conductor bar (14, 24) for connecting the cable end (3) to the GIS terminal (2), **characterised in that** the said conductor bar (14, 24) is movably provided within the cable box enclosure (1) such that it can be moved between a first position where it connects the cable end (3) to the GIS terminal (2) and a second position where it connects the cable end (3) with the cable box enclosure (1).

2. A cable box according to claim 1, **characterised in that** the cable box is further provided with a cable end electrode (15, 25) mounted on the cable end (3), the conductor bar (14, 24) being movably mounted in a bore (15a, 25a) within the cable end electrode (15, 25).

3. A cable box according to claim 1 or 2, **characterised in that** the conductor bar (14, 24) can be moved to a third position where the conductor bar (14, 24) is not connected to the GIS terminal (2) and is not connected to the cable box enclosure (1), and is substantially located within the cable end electrode (15, 25).

4. A cable box according to claim 1, 2 or 3, **characterised in that** the conductor bar (14, 24) is movably provided **in that** it can slide along its longitudinal axis.

5. A cable box according to any one of the preceding claims, **characterised in that** it comprises an insulated actuation rod (17) secured to the conductor bar (14) for operating the conductor bar (14), the actuation rod (17) extending through the cable box enclosure (1) at an access port cover (16).

6. A cable box according to any one of the preceding claims, **characterised in that** it comprises an actuation mechanism (27) connected to the conductor bar (24) for operating the conductor bar (24).

7. A cable box according to any one of the preceding claims, **characterised in that** the cable box enclosure (1) is earthed, and that the conductor bar (14, 24) in the second position corresponds to a position where the cable end (3) is earthed.

8. A method of earthing an electric cable in a cable box (20, 30) between a gas-insulated switchgear (GIS) and an electric cable, the method comprising:
- providing the cable box with a cable box enclosure (1), a GIS terminal (2) of the GIS, and a cable end (3) of the electric cable,
**characterised in that** the method further comprises
- movably providing a conductor bar (14, 24) for connecting the cable end (3) to the GIS terminal (2), and
- moving the conductor bar (14, 24) from a first position where it connects the cable end (3) to the GIS terminal (2) to a second position where it connects the cable end (3) with the cable box enclosure (1), so as to earth the electric cable.
